# EUROPEAN PATENT SPECIFICATION

(11) **EP 3 115 705 B1**
(45) Date of publication and mention of the grant of the patent: **07.04.2021**
(21) Application number: 16178024.2
(22) Date of filing: 05.07.2016
(51) Int. Cl.: F24F 5/00, G05D 22/02, F24F 11/00, F24F 11/30, F24F 11/76, F24F 11/77, F24F 110/10, F24F 110/20, G05D 23/19

(54) **METHOD OF OPTIMIZING THE DEHUMIDIFICATION FUNCTION FOR AIR-CONDITIONING UNITS FOR SERVER ROOMS AND THE LIKE AND AIR-CONDITIONING UNIT FOR APPLYING SUCH METHOD**
VERFAHREN ZUR OPTIMIERUNG DER ENTFEUCHTUNGSFUNKTION FÜR KLIMAANLAGENEINHEITEN FÜR SERVERRÄUME UND DERGLEICHEN UND KLIMAANLAGENEINHEITEN ZUR ANWENDUNG SOLCH EINES VERFAHRENS
PROCÉDÉ D'OPTIMISATION DE LA FONCTION DE DÉSHUMIDIFICATION POUR INSTALLATIONS DE CLIMATISATION POUR SALLES DE SERVEURS ET AUTRES ET UNITÉ DE CONDITIONNEMENT D'AIR POUR APPLIQUER CE PROCÉDÉ

(30) Priority: 07.07.2015 IT UB20151933
(43) Date of publication of application: 11.01.2017
(73) Proprietor: Vertiv S.R.L., 35028 Piove di Sacco (PD) (IT)
(72) Inventor: POLO, Fabio, 30010 CAMPOLONGO MAGGIORE VE (IT); GOBBO, Maurizio, 35028 PIOVE DI SACCO PD (IT); TAGLIAPIETRA, Piergiorgio, 30174 VENEZIA (IT); MICHIELI, Stefano, 35020 SANT' ANGELO DI PIOVE DI SACCO PD (IT); COCCATO, Nerio, 30010 CAMPOLONGO MAGGIORE, Frazione Bojon VE (IT)
(74) Representative: Modiano, Micaela Nadia

(56) References cited:
- CN-B- 103 185 384
- JP-A- 2004 225 948
- US-A1- 2005 257 537
- US-A1- 2009 192 650
- US-B1- 6 223 543

## Description

The present invention relates to a method of optimizing the dehumidification function for air-conditioning units for server rooms and the like, and to an air-conditioning unit for applying such method.

As is known, server rooms, and usually any site with a high density of electronic apparatuses, necessitate continuous air-conditioning adapted ad prevent the heat generated by the computers and by the electronic instruments from building up, resulting in temperatures so high as to damage the internal components of such instruments.

In this regard, air-conditioning units for server rooms are widely used which draw the hot air from behind the rack cabinets, which is where the electronic apparatuses typically blow air outside with adapted fans, so that this air passes through heat exchange means in order to then blow it, treated, into the passageways between the cabinets or into an underfloor interspace, if the floor is raised, in order to then convey it to the overlying environment or directly inside the rack cabinets, by way of grilles in the floor.

In order to ensure the correct operation of the electronic apparatuses, such air-conditioning units must be capable of controlling and keeping constant not only the temperature, but also the level of humidity present in the server room.

Often, in order to meet the required levels of conditioning, it is necessary to install high-performance systems in terms of power per square meter, which, in order to ensure effective heat exchange with the air taken in, use refrigerated water and operate with high levels of air flow.

High air flow levels require high air flow speeds and this implies a drawback that is not inconsiderable.

When, in addition to cooling the air, the system also has to dehumidify it, condensed water forms on the fins of the battery of the heat exchanger, and the high air speed causes the water droplets to be entrained and to reach the servers. Nowadays a number of solutions are known in order to overcome this drawback.

A first solution is to install a droplet separator in the machine, downstream of the battery, in order to capture each droplet carried by the air. Although effective, this solution is a source of additional cost for installing the separator, and it is also the cause of a drop in pressure and therefore of a reduction in the efficiency of the machine, independently of its actual operating mode, and therefore even in conditions where the air is only cooled and is not dehumidified.

A second solution entails installing a pump for recirculating the water exiting from the battery, so as to keep the entry temperature of the water sufficiently higher than the dew point temperature of the air, thus preventing the condensation of the water. This solution is also not optimal however because, apart from the fact that the pump is an additional cost, it also requires the installation of supplementary elements such as valves and ducts, plus a higher energy consumption, during cooling the machine is not capable of dehumidifying the air.

US 6 223 543 B1 discloses a control system for a cooling system for reducing humidity levels in a gas such as ambient air, comprising at least one of a compressor and a chiller, and cooling coils connected to the cooling unit. A fan blows the gas onto the cooling coils. A fan speed controller is connected to the fan and variably controls the speed of the fan. A dry bulb temperature sensor is in thermal communication with the gas and connected to the controller, and a moisture sensor is in communication with the gas and connected to the controller. The speed of the fan is determined by the controller based on signals received from the dry bulb temperature sensor and the moisture sensor. By varying the speed of the fan, the moisture content of the gas can be modified.

The aim of the present invention is to provide a method of optimizing the dehumidification function for air-conditioning units and an air-conditioning unit for applying such method, with which to overcome the limitations and drawbacks of conventional air-conditioning units.

Within this aim, an object of the invention is to provide a method and an air-conditioning unit that make it possible to dehumidify air in any operating mode and without compromising the performance of the system.

Another object of the invention is to provide an air-conditioning unit that can carry out the method above, that is structurally simple, and which can be produced and run at low cost.

This aim and these and other objects which will become better apparent hereinafter are achieved by a method of optimizing the dehumidification function for air-conditioning units for server rooms and the like, which comprises the following steps:
- monitoring the temperature and humidity of air entering an air-conditioning unit,
- monitoring the temperature of water entering said air-conditioning unit,
- if the water temperature is lower than the air temperature, reducing the speed of air outflow fans to a value such as to avoid the entrainment of water formed by condensation on a heat exchanger of said air-conditioning unit,
- if the temperature and humidity of the air entering said air-conditioning unit are such that the dew point temperature of the air is higher than the water temperature, returning the speed of the fans to the nominal value.

The invention also relates to an air-conditioning unit for optimizing the dehumidification function, as defined in the appended claims.

Further characteristics and advantages of the invention will become better apparent from the detailed description that follows of a preferred, but not exclusive, embodiment of the method and of the air-conditioning unit according to the invention, which are illustrated for the purposes of nonlimiting example in the accompanying drawings wherein:
Figure 1 schematically illustrates an air-conditioning unit according to the invention;
Figure 2 is a block diagram of the method according to the invention.

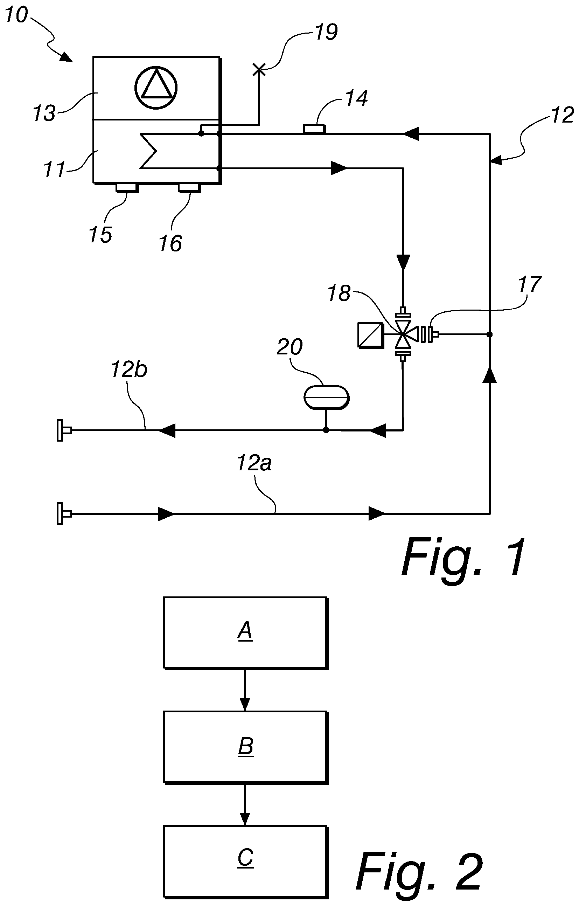

With reference to Figure 1, the air-conditioning unit according to the invention is generally designated with the reference numeral 10.

With reference to Figure 2, the method according to the invention, which is devised to optimize the dehumidification function for an air-conditioning unit 10, comprises the following steps:
- monitoring the temperature and humidity of the air entering the air-conditioning unit 10 (step A in the block diagram in Figure 2),
- monitoring the temperature of the water entering the air-conditioning unit 10 (step A in the block diagram in Figure 2),
- if the water temperature is lower than the air temperature, reducing the speed of the air outflow fans 13 to a value such as to avoid the entrainment of water formed by condensation on a heat exchanger 11 of the air-conditioning unit 10 (step B in the block diagram in Figure 2),
- if the temperature and humidity of the air entering the air-conditioning unit are such that the dew point temperature of the air is higher than the water temperature, returning the speed of the fans 13 to the nominal value (step C in the block diagram in Figure 2).

The air-conditioning unit 10 comprises:
- a heat exchanger 11 for cooling an air-conditioning air flow,
- a refrigerated water circuit 12 which passes through the heat exchanger 11 (in particular in Figure 1 the reference numerals 12a and 12b respectively designate the water entry branch duct into the exchanger and the exit branch duct),

- fans 13 for moving the cooled air-conditioning air flow,
- a first temperature sensor 14 for measuring the temperature of the water entering the air-conditioning unit 10,
- a second temperature sensor 15 for measuring the temperature of the air entering the air-conditioning unit 10,
- a humidity sensor 16 for measuring the humidity of the air entering the air-conditioning unit 10,
- an electronic control and management unit (not shown) designed to control the fans 13 in order to manage their speed.

The electronic control and management unit is adapted to calculate the dew point temperature of the air entering the air-conditioning unit 10, as a function of the measured temperature and humidity by way of respectively the second temperature sensor 15 and the humidity sensor 16.

As a function of the ratio between the temperature of the water entering and the temperature of the air entering the same air-conditioning unit 10, and as a function of the ratio between the temperature of the water entering and the dew point temperature of the air entering, the electronic control and management unit regulates the speed of the fans 13.

Figure 1 shows the branch ducts of the circuit 12, on which there are other, conventional elements.

In particular, on the water entry branch duct 12a to the heat exchanger 11 there is a valve 17 which corresponds to a three-way valve 18 installed on the water exit branch duct 12b. This solution makes it possible to manage the flow of refrigerated water entering the heat exchanger 11, allowing the passage of some of the water from the entry branch duct 12a to the exit branch duct 12b upstream of the exchanger, if not all of the flow of water is necessary for cooling.

Also on the circuit 12, at the heat exchanger 11, there is conveniently an air bleeding valve 19.

On the exit branch duct 12b, downstream of the three-way valve 18, is a flow meter 20.

Operation of the air-conditioning unit 10 according to the invention, in application of the method of optimization of the dehumidification function, is the following.

The first sensor 14 and the second sensor 15 measure respectively the temperature of the water entering the air-conditioning unit 10 and the temperature of the air entering the same unit.

When the temperature of the water is lower than the temperature of the air, dehumidification takes place and, therefore, condensation will form on the fins of the battery of the heat exchanger 11.

The electronic control and management unit therefore reduces the rotation speed of the fans 13 to a value that is such that the flow of cooled air exiting from the fans 13 is not capable of entraining condensed water from the fins of the battery toward the electronic apparatuses.

In the meantime the humidity of the air entering the air-conditioning unit 10 is also monitored, by way of the humidity sensor 16. With this value and with the temperature of the same air, the dew point temperature of the air is calculated and monitored.

If the dew point temperature is higher than the temperature of the water, the electronic control and management unit will bring the speed of the fans 13 back down to the nominal value.

In practice it has been found that the invention fully achieves the intended aim and objects by devising a method by way of which the dehumidification function of an air-conditioning unit is optimized.

In fact, thanks to the method devised, the air-conditioning system is capable of cooling the air and also of dehumidifying it at the same time, therefore of working in any operating mode, without reducing the efficiency of the system itself.

Furthermore, the air-conditioning unit is structurally simple and it can be produced and run at low cost, because no additional mechanical parts are required, only the use of sensors.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

This application claims priority of the disclosures in Italian Patent Application No. 102015000031376 (UB2015A001933).

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method of optimizing the dehumidification function for air-conditioning units for server rooms and the like, which comprises the following steps:
- monitoring the temperature and humidity of air entering an air-conditioning unit (10),
- monitoring the temperature of water entering said air-conditioning unit (10), the method **characterized in that**
- if the water temperature is lower than the air temperature, reducing the speed of air outflow fans (13) to a value such as to avoid the entrainment of water formed by condensation on a heat exchanger (11) of said air-conditioning unit (10),
- if the temperature and humidity of the air entering said air-conditioning unit (10) are such that the dew point temperature of the air is higher than the water temperature, returning the speed of the fans (13) to the nominal value.

2. An air-conditioning unit (10) configured to apply the method according to claim 1, of the type that comprises:
- a heat exchanger (11) for cooling an air-conditioning air flow,
- a refrigerated water circuit (12) which passes through said heat exchanger (11),
- at least one fan (13) for moving the cooled air-conditioning air flow, said air-conditioning unit (10) being **characterized in that** it also comprises:
- a first temperature sensor (14) configured to measure the temperature of the water entering said air-conditioning unit (10),
- a second temperature sensor (15) configured to measure the temperature of the air entering the air-conditioning unit (10),
- a humidity sensor (16) configured to measure the humidity of the air entering the air-conditioning unit (10),
- an electronic control and management unit configured to control said at least one fan (13) in order to manage its speed such that if the water temperature is lower than the air temperature, the speed of said at least one fan (13) is reduced to a value such as to avoid the entrainment of water formed by condensation on said heat exchanger (11) of said air-conditioning unit (10), and such that if the temperature and humidity of the air entering said air-conditioning unit (10) are such that the dew point temperature of the air is higher than the water temperature, the speed of said at least one fan (13) is returned to the nominal value.

3. The air-conditioning unit according to claim 2, **characterized in that** said electronic control and management unit is configured to calculate the dew point temperature of the air entering said air-conditioning unit (10), as a function of the measured temperature and humidity.

4. The air-conditioning unit according to one or more of claims 2 and 3, **characterized in that** said electronic control and management unit is configured to control and manage the speed of said at least one fan (13) as a function of the ratio between the temperature of the water entering and the temperature of the air entering said air-conditioning unit (10) and/or between the temperature of the water entering and the dew point temperature of the air entering.

## Patentansprüche

1. Ein Verfahren zur Optimierung der Entfeuchtungsfunktion für Klimaanlageneinheiten für Serverräume und dergleichen, das folgende Schritte umfasst:
- Überwachen der Temperatur und Feuchtigkeit der Luft, die in eine Klimaanlageneinheiten (10) eintritt,
- Überwachen der Temperatur des Wassers, das in die Klimaanlageneinheiten (10) eintritt, wobei das Verfahren **dadurch gekennzeichnet, dass**
- wenn die Wassertemperatur niedriger ist als die Lufttemperatur, die Geschwindigkeit von Luftauslassventilatoren (13) auf einen solchen Wert reduziert wird, dass die Mitnahme von Wasser vermieden wird, das durch Kondensation an einem Wärmetauscher (11) der Klimaanlageneinheit (10) gebildet wird,
- wenn die Temperatur und die Feuchtigkeit der Luft, die in die Klimaanlageneinheit (10) eintritt derart sind, dass die Taupunkttemperatur der Luft höher ist als die Wassertemperatur, die Geschwindigkeit der Ventilatoren (13) auf den Nominalwert zurückgesetzt wird.

2. Eine Klimaanlageneinheit (10) konfiguriert, um das Verfahren gemäß Anspruch 1 anzuwenden, von der Art, die Folgendes umfasst:
- einen Wärmetauscher (11) zum Kühlen eines Klimaanlagenluftstroms,
- einen Kühlwasserkreislauf (12) der den Wärmetauscher (11) durchläuft,
- mindestens einen Ventilator (13) zum Bewegen des gekühlten Klimaanlagenluftstroms,
wobei die Klimaanlageneinheit (10) **dadurch gekennzeichnet ist, dass** sie auch Folgendes umfasst:
- einen ersten Temperatursensor (14) konfiguriert, um die Temperatur des Wassers zu messen, das in die Klimaanlageneinheit (10) eintritt,
- einen zweiten Temperatursensor (15) konfiguriert, um die Temperatur der Luft zu messen, die in die Klimaanlageneinheit (10) eintritt,
- einen Feuchtigkeitssensor (16) konfiguriert, um die Feuchtigkeit der Luft zu messen, die in die Klimaanlageneinheit (10) eintritt,
- eine elektronische Steuer- und Verwaltungseinheit konfiguriert, um den mindestens einen Ventilator (13) zu steuern, um seine Geschwindigkeit so zu regeln, dass die Wassertemperatur niedriger ist als die Lufttemperatur, die Geschwindigkeit des mindestens einen Ventilator (13) wird auf einen solchen Wert reduziert, dass die Mitnahme von Wasser, das durch Kondensation auf dem Wärmetauscher (11) der Klimaanlageneinheit (10) gebildet wird, vermieden wird und so dass, wenn die Temperatur und Feuchtigkeit der Luft, die in die Klimaanlageneinheit (10) eintritt derart sind, dass die Taupunkttemperatur der Luft höher ist als die Wassertemperatur, die Geschwindigkeit des mindestens einen Ventilators (13) auf den Nominalwert zurückgesetzt wird.

3. Die Klimaanlageneinheit gemäß Anspruch 2, **dadurch gekennzeichnet, dass** die elektronische Steuer- und Verwaltungseinheit konfiguriert ist, um die Taupunkttemperatur der Luft, die in die Klimaanlageneinheit (10) eintritt als Funktion der gemessenen Temperatur und der Feuchtigkeit zu berechnen.

4. Die Klimaanlageneinheit gemäß einem oder mehreren der Ansprüche 2 und 3, **dadurch gekennzeichnet, dass** die elektronische Steuer- und Verwaltungseinheit konfiguriert ist, um die Geschwindigkeit des mindestens einen Ventilators (13) als Funktion des Verhältnisses zwischen der Temperatur des Wassers, dass in die Klimaanlageneinheit (10) eintritt und der Temperatur der Luft, die in die Klimaanlageneinheit (10) eintritt und/oder zwischen der Temperatur des Wassers, das eintritt und der Taupunkttemperatur der Luft, die eintritt, zu steuern und zu verwalten.

## Revendications

1. Procédé d'optimisation de la fonction de déshumidification pour des unités de conditionnement d'air pour des salles de serveurs et analogues, qui comporte les étapes suivantes consistant à :
- surveiller la température et l'humidité de l'air entrant dans une unité de conditionnement d'air (10),
- surveiller la température de l'eau entrant dans ladite unité de conditionnement d'air (10), le procédé étant **caractérisé en ce que**
- si la température de l'eau est inférieure à la température de l'air, réduire la vitesse de ventilateurs d'écoulement de sortie d'air (13) jusqu'à une valeur de telle manière à éviter l'entraînement d'eau formée par condensation sur un échangeur de chaleur (11) de ladite unité de conditionnement d'air (10),
- si la température et l'humidité de l'air entrant dans ladite unité de conditionnement d'air (10) sont telles que la température du point de rosée de l'air est supérieure à la température de l'eau, ramener la vitesse des ventilateurs (13) à la valeur nominale.

2. Unité de conditionnement d'air (10) configurée pour appliquer le procédé selon la revendication 1, du type qui comporte :
- un échangeur de chaleur (11) pour refroidir un écoulement d'air de conditionnement d'air,
- un circuit d'eau réfrigérée (12) qui passe à travers ledit échangeur de chaleur (11),
- au moins un ventilateur (13) pour déplacer l'écoulement d'air de conditionnement d'air refroidi, ladite unité de conditionnement d'air (10) étant **caractérisée en ce qu'**elle comporte également :
- un premier capteur de température (14) configuré pour mesurer la température de l'eau entrant dans ladite unité de conditionnement d'air (10),
- un second capteur de température (15) configuré pour mesurer la température de l'air entrant dans ladite unité de conditionnement d'air (10),
- un capteur d'humidité (16) configuré pour mesurer l'humidité de l'air entrant dans l'unité de conditionnement d'air (10),
- une unité de commande électronique et de gestion configurée pour commander ledit au moins un ventilateur (13) afin de gérer sa vitesse de telle sorte que si la température de l'eau est inférieure à la température de l'air, la vitesse dudit au moins un ventilateur (13) est ramenée à une valeur de telle manière à éviter l'entraînement d'eau formée par condensation sur ledit échangeur de chaleur (11) de ladite unité de conditionnement d'air (10), et de telle sorte que si la température et l'humidité de l'air entrant dans ladite unité de conditionnement d'air (10) sont telles que la température du point de rosée de l'air est supérieure à la température de l'eau, la vitesse dudit au moins un ventilateur (13) est ramenée à la valeur nominale.

3. Unité de conditionnement d'air selon la revendication 2, **caractérisée en ce que** ladite unité de commande électronique et de gestion est configurée pour calculer la température du point de rosée de l'air entrant dans ladite unité de conditionnement d'air (10), en fonction de la température et de l'humidité mesurées.

4. Unité de conditionnement d'air selon une ou plusieurs des revendications 2 et 3, **caractérisée en ce que** ladite unité de commande électronique et de gestion est configurée pour commander et gérer la vitesse dudit au moins un ventilateur (13) en fonction du rapport entre la température de l'eau entrante et la température de l'air entrant dans ladite unité de conditionnement d'air (10) et/ou entre la température de l'eau entrante et la température du point de rosée de l'air entrant.
